# FASCICULE DE BREVET EUROPEEN

(11) **EP 3 477 165 B1**
(45) Date de publication et mention de la délivrance du brevet: **13.05.2020**
(21) Numéro de dépôt: 18202917.3
(22) Date de dépôt: 26.10.2018
(51) Int. Cl.: F16K 3/03, F16K 31/53, F16K 31/00

(54) **VANNE DE RÉGULATION À IRIS ET TRAIN EPICYCLOÏDAL**
IRIS-REGELVENTIL MIT EPIZYKLOIDALEM ANTRIEB
IRIS CONTROL VALVE WITH EPICYLIC DRIVE

(30) Priorité: 30.10.2017 FR 1760230
(43) Date de publication de la demande: 01.05.2019
(73) Titulaire: Aereco, 77615 Marne la Vallée Cedex 03 (FR)
(72) Inventeur: BURIAS, Olivier, 77615 MARNE LA VALLEE CEDEX 3 (FR)
(74) Mandataire: Delorme, Nicolas

(56) Documents cités:
- RU-C1- 2 109 192
- US-A- 2 307 273

## Description

L'invention concerne une vanne de régulation adaptée pour équiper indifféremment un dispositif de ventilation, une bouche d'extraction d'air, ou une bouche d'entrée d'air, notamment pour un système de ventilation contrôlée d'un logement. Une telle vanne est connue par exemple du document US 2 307 273 A.

L'invention concerne plus généralement tous domaines nécéssitant la modulation et régulation du débit d'un fluide.

Il est connu d'utiliser un dispoitif de ventilation contrôlée pour réguler le débit de renouvelement de l'air dans un logement en fonction de différents paramètres, comme la qualité de l'air, l'humidité de l'air et la présence ou non d'une personne dans le logement, par exemple.

A cet effet, un dispositif de ventilation contrôlée comporte généralement une pluralité de bouches d'extraction d'air, ou de bouches d'entrée d'air, qui sont chacune reliées sur une gaine de circulation d'air.

Chaque bouche délimite un orifice de passage de l'air qui est équipé d'une vanne de régulation du débit d'air adpté pour moduler la section de l'orifice de passage de l'air.

Dans ce but, la vanne de régulation comporte des volets qui sont montés pivotant autour d'un axe perpendiculaire à l'axe d'écoulement du flux d'air, entre une position d'ouverture dans laquelle les volets sont escamotés pour permettre le passage du fluide à travers l'orifice de passage, et une position de fermeture dans laquelle les volets forment une barrière obturant l'orifice de passage du fluide.

L'entraînement en pivotement des volets peut être réalisé par une action mécanique d'un utilisateur au moyen d'une cordelette, par un dispositif motorisé ou encore par un dispositif hygroréglable.

Le dispositif hygroréglable comprend généralement un élément hygroscopique longiligne qui s'étend depuis une première extrémité reliée sur un bâti fixe jusqu'à une seconde extrémité d'actionnement reliée sur un mécanisme d'entraînement des volets par l'intermédiaire d'un ressort de tension qui met en tension l'élément hygroscopique.

L'élément hygroscopique est conçu pour s'allonger et se rétracter suivant le taux d'humidité relatif de l'air ambiant, de façon à ouvrir plus ou moins l'orifice de passage de l'air en actionnant les volets prévus à cet effet.

L'élément hygroscopique peut être un tissu en polyamide qui est formé par plusieurs rubans dont la longueur varie selon le taux d'humidité de l'air ambiant.

La longueur de l'élément hygroscopique varie également suivant l'effort de traction appliqué sur l'extrémité d'actionnement de l'élément hygroscopique.

Si un frottement apparait dans le mécanisme d'entraînement des volets qui est relié sur l'élément hygroscopique, le frottement augmente l'effort de traction appliqué sur l'élément hygroscopique lors de sa rétractation mais, à l'inverse, le frottement réduit l'effort de traction appliqué sur l'élément hygroscopique lors de sa détente.

Ainsi, il apparait une hystérésis, c'est-à-dire un écart entre la position des volets pour un taux d'humidité relatif donné entre le mouvement aller, qui correspond à une augmentation du taux d'humidité relatif de l'air et le mouvement retour, qui correspond à une diminution du taux d'humidité relatif de l'air.

L'invention vise à réduire l'hystérésis décrit ci-dessus, qui est néfaste à une maîtrise précise du renouvellement de l'air dans un logement.

La présente invention vise notamment à résoudre cet inconvénient et se rapporte pour ce faire à une vanne de régulation à iris pour la régulation du débit d'un fluide, caractérisée en ce qu'elle comporte au moins :
- un bâti fixe qui délimite un orifice pour le passage du fluide,
- une couronne extérieure dentée qui délimite une première denture circulaire qui s'étend autour d'un axe principal,
- une couronne intérieure dentée qui délimite une seconde denture circulaire qui s'étend autour de l'axe principal, en vis-à-vis de la première denture,
- un iris qui comprend une pluralité de volets qui s'étendent chacun dans un plan radial perpendiculaire à l'axe principal, et qui sont solidaires chacun d'une roue dentée formant satellite qui engrène dans la couronne extérieure et dans la couronne intérieure, chaque roue dentée étant libre en rotation autour d'un axe satellite associé, au moins une desdites couronnes étant solidaire du bâti et l'autre couronne étant une couronne dite motrice qui est montée mobile en rotation et entraîne en déplacement l'iris entre une position d'ouverture dans laquelle les volets sont escamotés pour permettre le passage du fluide à travers l'orifice de passage et une position de fermeture dans laquelle les volets forment un obstacle obturant, au moins en partie, l'orifice de passage du fluide.

Le train épicycloïdal formé par les deux couronnes et les roues dentées satellites permettent de réduire voire de s'affranchir de l'effet d'hystérésis.

Selon une autre caractéristique, la vanne comporte un dispositif d'entraînement en rotation de la couronne motrice, ledit dispositif d'entraînement comportant au moins :
- un élément hygroscopique qui s'étend depuis une première extrémité fixe reliée sur le bâti, jusqu'à une seconde extrémité d'actionnement, l'élément hygroscopique étant conçu pour s'allonger et se rétracter suivant le taux d'humidité de l'air ambiant,
- un mécanisme de liaison qui relie la seconde extrémité d'actionnement de l'élément hygroscopique sur la couronne motrice, pour entraîner en déplacement l'iris au cours de l'allongement et de la rétractation de l'élément hygroscopique.

Selon cette caractéristique, à chaque taux d'humidité relatif de l'air et à chaque position de l'élément hygroscopique correspond une position précise de l'ouverture de l'iris.

Selon une autre caractéristique, le mécanisme de liaison comporte un ressort de tension qui met l'élément hygroscopique en tension.

Cette caractéristique permet de maintenir l'élément hygroscopique tendu quel que soit le taux d'humidité relatif de l'air.

Selon une autre caractéristique, la roue dentée de chaque volet est montée libre radialement suivant l'axe principal par rapport au bâti, entre la couronne extérieure et la couronne intérieure.

Selon une autre caractéristique, la roue dentée de chaque volet comporte une première butée ponctuelle et une seconde butée ponctuelle qui sont opposées axialement et qui s'étendent suivant l'axe satellite de la roue dentée associée, la première butée et la seconde butée étant en appui axial sur un premier carter et sur un second carter respectivement, lesdits carters s'étendant en vis-à-vis, perpendiculairement à l'axe satellite de chaque roue dentée.

Selon une autre caractéristique, les volets formant l'iris sont coplanaires de sorte qu'ils ne se chevauchent pas entre eux.

Selon une autre caractéristique, au moins une partie des pièces de l'ensemble formé par les roues dentées, la couronne extérieure et la couronne intérieure est réalisée dans une matière plastique qui est adaptée pour limiter les effets de l'hyperstatisme dudit ensemble.

Selon un premier mode de réalisation de l'invention, la couronne motrice est la couronne extérieure.

Selon un second mode de réalisation de l'invention, la couronne motrice est la couronne intérieure.

L'invention concerne également un système de ventilation mécanique contrôlée qui comporte au moins une vanne de régulation à iris du type décrite précédemment.

D'autres caractéristiques et avantages de l'invention apparaîtront à la lecture de la description détaillée qui suit pour la compréhension de laquelle on se reportera aux dessins annexés dans lesquels :
- la figure 1 est une vue de face en perspective, qui illustre un premier exemple de réalisation de la vanne de régulation selon l'invention,
- la figure 2 est une vue de côté qui illustre la vanne de la figure 1,
- la figure 3 est une vue en section verticale suivant la ligne 3-3 de la figure 2, qui illustre les volets de l'iris et les couronnes intérieure et extérieure de la vanne de la figure 1,
- la figure 4 est une vue de détail en perspective, qui illustre un volet et sa roue dentée associée,
- la figure 5 est une vue en section transversale suivant la ligne 5-5 de la figure 3, qui illustre l'agencement des roues dentées des volets et des couronnes extérieures et intérieures,
- la figure 6 est une vue en section verticale suivant la ligne 6-6 de la figure 2, qui illustre le dispositif d'entraînement de l'iris,
- les figures 7 à 9 sont des vues de derrière qui illustrent l'iris dans une position d'ouverture, une position intermédiaire et une position de fermeture respectivement,
- la figure 10 est une vue de face qui illustre la vanne de régulation selon un second exemple de réalisation de l'invention,
- la figure 11 est une vue en section transversale qui illustre la vanne de la figure 10,
- la figure 12 est une vue de détail en perspective qui illustre la fonction de débrayage du dispositif d'entraînement de la vanne de régulation selon le second mode de réalisation ;
- la figure 13 est une vue de derrière qui illustre les couronnes extérieure et intérieure de la vanne de la figure 10,
- la figure 14 est une vue schématique qui illustre un système de ventilation mécanique comportant une vanne de régulation selon l'invention.

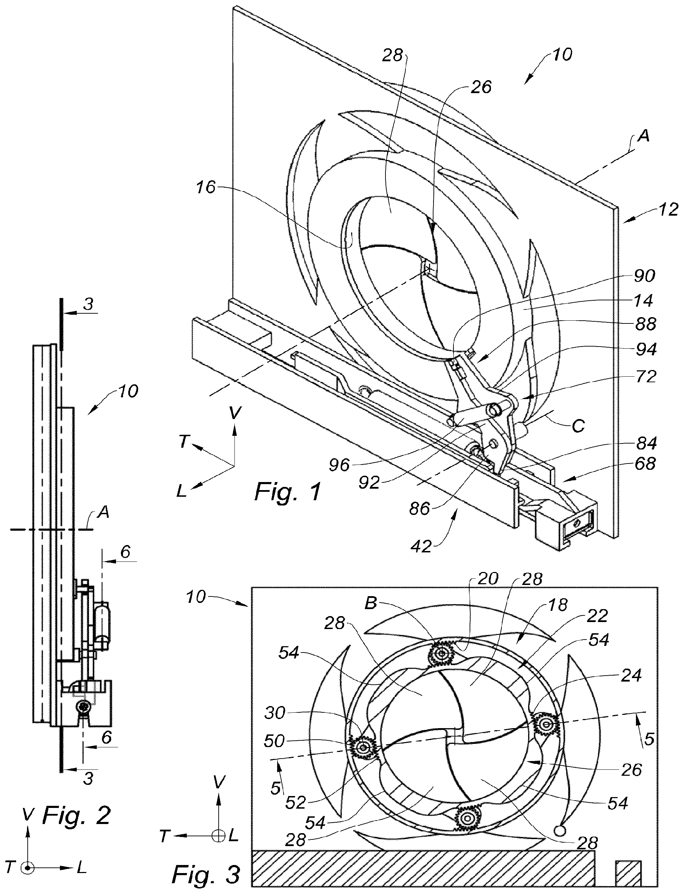

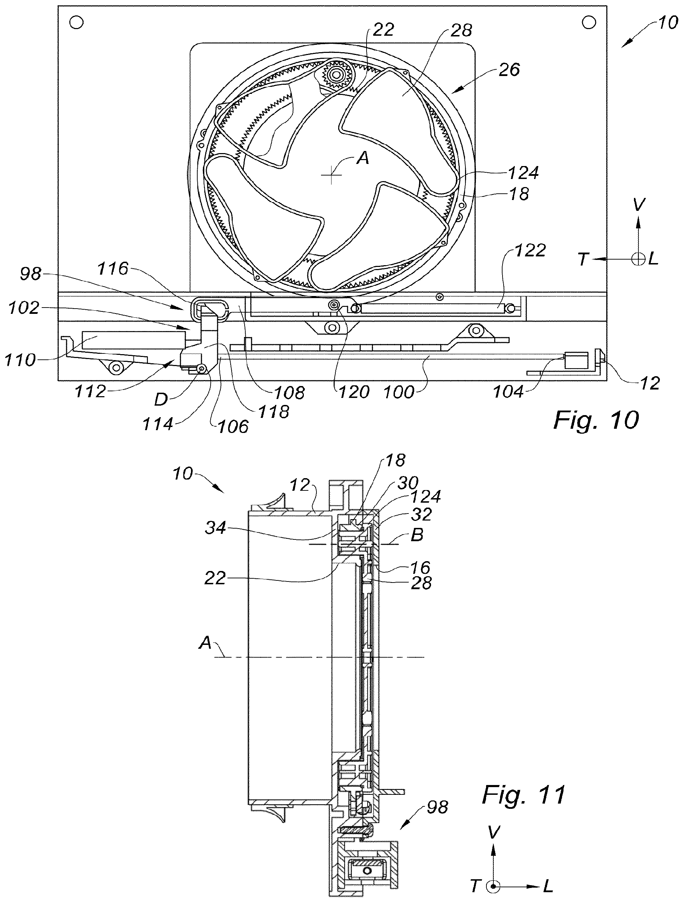

Dans la description et les revendications, on utilisera à titre non limitatif les expressions « supérieur » et « inférieur » en référence à la partie supérieure et à la partie inférieure respectivement des figures 1 et 10.

De plus, pour clarifier la description et les revendications, on adoptera à titre non limitatif la terminologie longitudinal, vertical et transversal en référence au trièdre L, V, T indiqué aux figures, dont l'axe L est parallèle à l'axe de la vanne.

Pour les différentes variantes de réalisation, les mêmes références pourront être utilisées pour des éléments identiques ou assurant la même fonction, par souci de simplification de la description.

On a représenté à la figure 1 une vanne de régulation 10 à iris pour la régulation du débit d'un flux d'air.

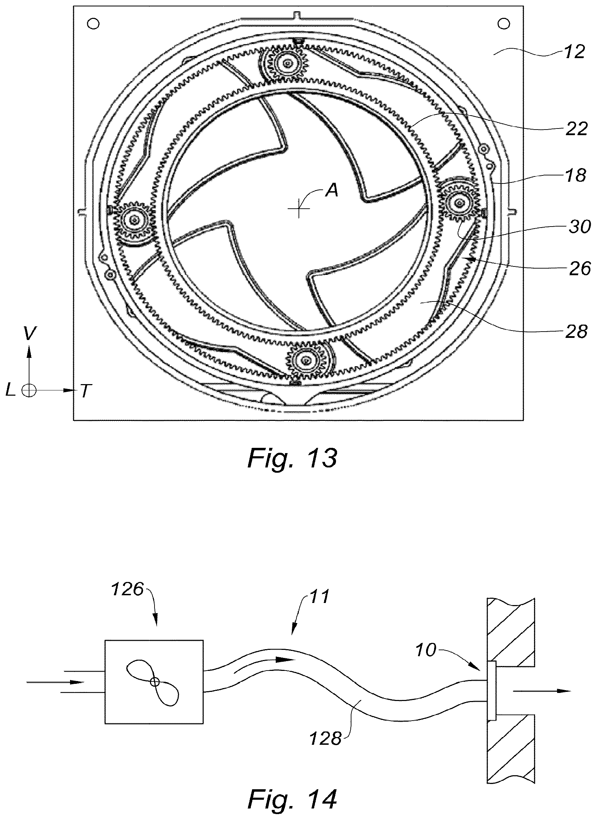

La vanne de régulation 10 est adaptée pour constituer un élément d'un système de ventilation mécanique contrôlée 11 représenté à la figure 14.

La vanne de régulation 10 comporte un bâti 12 fixe qui délimite un orifice 16 circulaire pour le passage du flux d'air, l'orifice 16 s'étendant autour d'un axe A longitudinal dit axe principal.

En référence à la figure 3, la vanne de régulation 10 est équipée d'une couronne extérieure 18 dentée circulaire qui délimite une première denture 20 qui s'étend autour de l'axe A principal.

De plus, la vanne de régulation 10 est équipée d'une couronne intérieure 22 dentée circulaire qui délimite une seconde denture 24 qui s'étend autour de l'axe A principal, en vis-à-vis de la première denture 20.

En complément, la vanne de régulation 10 comporte un iris 26 qui comprend quatre volets 28 identiques qui s'étendent chacun dans un plan radial perpendiculaire à l'axe A principal.

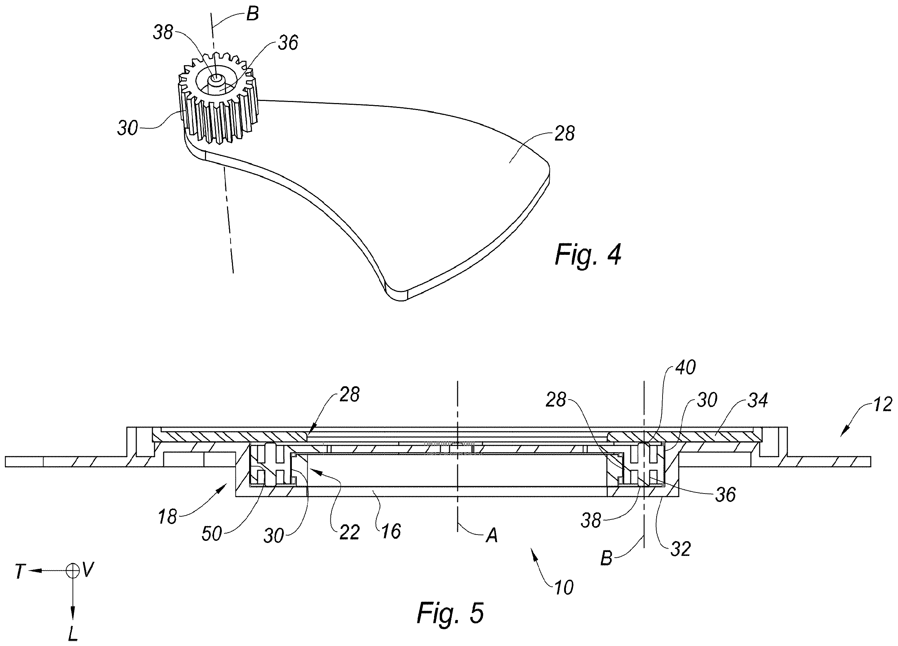

Comme on peut le voir à la figure 4, chaque volet 28 est solidaire d'une roue dentée 30 qui forme un satellite et qui présente un axe B satellite longitudinal et parallèle à l'axe A principal.

Chaque roue dentée 30 engrène dans la couronne extérieure 18 et dans la couronne intérieure 22 simultanément.

A cet effet, chaque roue dentée 30 est libre en rotation autour de son axe B satellite associé.

Aussi, la roue dentée 30 de chaque volet 28 est montée libre radialement par rapport au bâti 12, c'est-à-dire perpendiculairement à l'axe A principal, entre la couronne extérieure 18 et la couronne intérieure 22.

Autrement dit, chaque roue dentée 30 est bloquée radialement et portée par la couronne extérieure 18 d'un côté et par la couronne intérieure 22 d'un côté opposé.

On notera que les roues dentées 30 sont décalées angulairement autour de l'axe A principal de façon régulière. Les roues dentées 30 sont ici décalées régulièrement d'un angle de 90 degrés.

En référence à la figure 5, le bâti 12 comprend un premier carter avant 32 et un second carter arrière 34 qui s'étendent en vis-à-vis, transversalement et perpendiculairement à l'axe A principal.

Les carters 32, 34 délimitent entre eux un logement dans lequel sont agencés les volets 28, la couronne extérieure 18 et la couronne intérieure 22.

La roue dentée 30 de chaque volet 28 comporte une tige centrale 36 qui s'étend axialement suivant l'axe B satellite associé, depuis une extrémité avant qui forme une première butée 38 ponctuelle, jusqu'à une extrémité arrière qui forme une seconde butée 40 ponctuelle.

La première butée 38 et la seconde butée 40 sont en appui axial longitudinal sur le premier carter 32 et sur le second carter 34 respectivement, de sorte que chaque roue dentée 30 est bloquée axialement en translation par les carters 32, 34.

Selon un premier exemple de réalisation de l'invention représenté aux figures 1 à 9, la couronne extérieure 18 est fixe et solidaire du bâti 12, tandis que la couronne intérieure 22 est une couronne dite motrice qui est montée mobile en rotation autour de l'axe A principal.

La couronne intérieure 22 est entraînée en rotation par un dispositif d'entraînement 42 en rotation, la rotation de la couronne intérieure 22 permettant l'entraînement en rotation des volets 28 de l'iris 26 par l'intermédiaire des roues dentées 30 satellites.

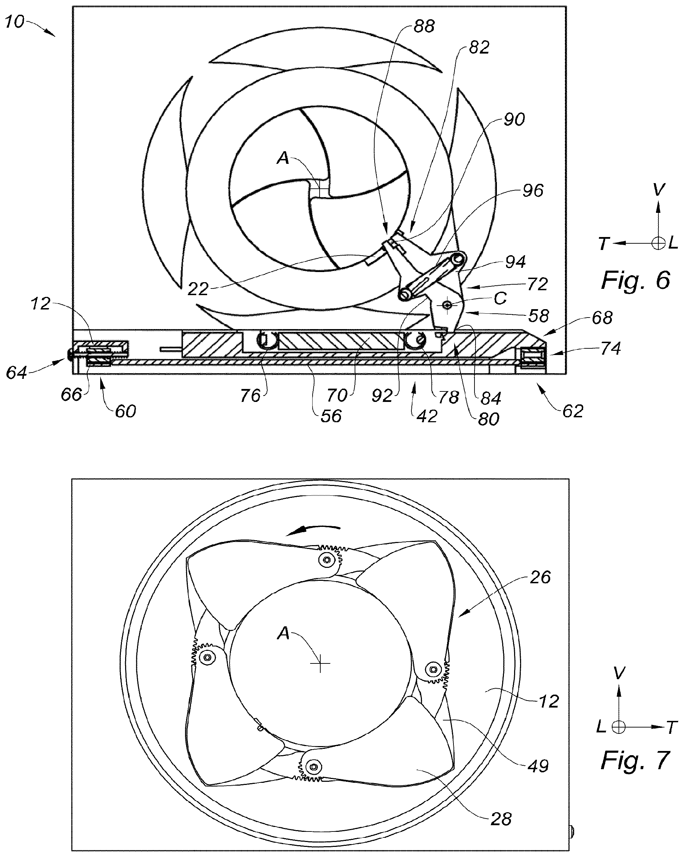

Ainsi, l'iris 26 est mobile entre une position d'ouverture, représentée à la figure 7, dans laquelle les volets 28 sont escamotés pour permettre le passage du flux d'air à travers l'orifice 16 de passage, et une position de fermeture représentée aux figures 1, 3, 6 et 9, dans laquelle les volets 28 forment un obstacle obturant l'orifice 16 de passage du flux d'air.

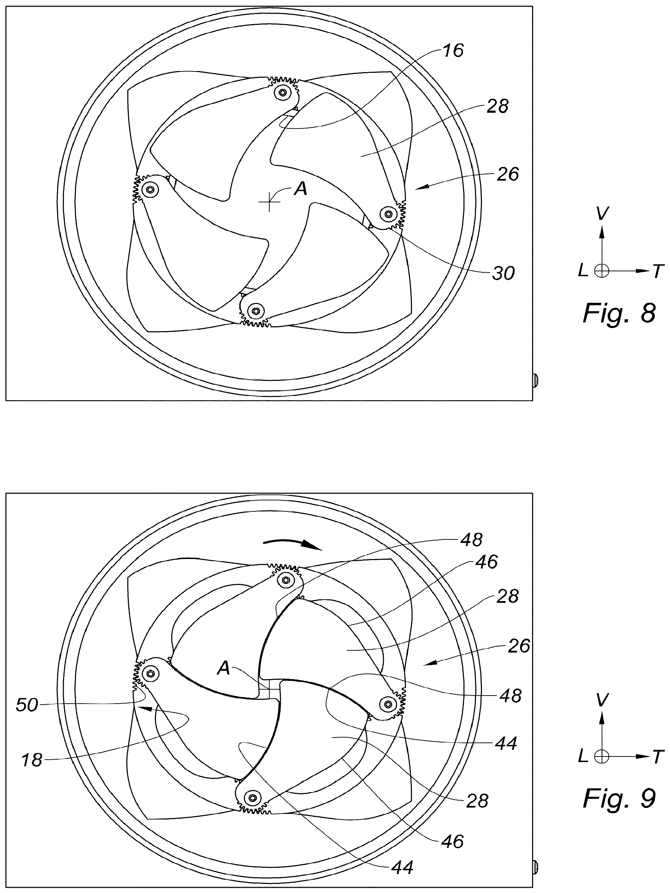

On a également représenté à la figure 8 une des nombreuses positions intermédiaires d'ouverture de l'iris 26, les positions intermédiaires permettant de réguler le débit du flux d'air à travers l'orifice 16 suivant le taux d'humidité relatif de l'air ambiant.

Selon ce premier mode de réalisation, la couronne intérieure 22 motrice est bloquée radialement par les roues dentées 30 de chaque volet 28, comme on peut le voir à la figure 3.

Aussi, en référence à la figure 5, la couronne intérieure 22 motrice est bloquée en translation axiale par le carter avant 32 d'un premier côté et par les volets 28 d'un second côté opposé.

Comme on peut le voir à la figure 1, les volets 28 qui forment l'iris 26 sont coplanaires, c'est-à-dire qu'ils s'étendent tous dans un même plan vertical, perpendiculairement à l'axe A principal, de sorte que les volets 28 ne se chevauchent pas entre eux.

De plus, pour permettre l'obturation de l'orifice 16, les volets 28 présentent une forme complémentaire.

Plus particulièrement, en référence à la figure 9, chaque volet 28 est délimité par un bord interne 44 concave, un bord externe 46 convexe et un bord distal 48 convexe.

Le bord distal 48 de chaque volet 28 présente une forme adaptée pour épouser la forme du bord interne 44 du volet 28 directement précédent, suivant un sens horaire, lorsque l'iris 26 occupe sa position de fermeture.

On notera que dans sa position de fermeture, l'iris 26 présente une faible ouverture dans sa partie centrale, qui permet d'assurer un débit de ventilation minimum pour répondre à certaines réglementations.

De même, le bord interne 44 de chaque volet 28 présente une forme courbe globalement complémentaire à la forme de l'orifice 16 de passage du flux d'air, de sorte que le bord interne 44 de chaque volet 28 n'entrave pas la circulation du flux d'air lorsque l'iris 26 occupe sa position d'ouverture.

Pour permettre l'escamotage des volets 28 lorsque l'iris 26 occupe sa position d'ouverture représentée à la figure 7, le bâti 12 délimite quatre logements 49 prévus à cet effet.

Selon un autre aspect, comme on peut le voir à la figure 5, la couronne extérieure 18 fixe est réalisée venue de matière avec le bâti 12.

Aussi, la denture 20 de la couronne extérieure 18 comporte quatre secteurs dentés 50 qui engrènent chacun dans une des roues dentées 30 associée.

De même, selon la figure 3, la denture 24 de la couronne intérieure 22 comporte quatre secteurs dentés 52 qui engrènent chacun dans une des roues dentées 30 associée.

On remarque que la couronne intérieure 22 forme quatre lobes 54 qui sont interposés entre les secteurs dentés 52 associés.

Les lobes 54 sont conçus pour renforcer mécaniquement la couronne intérieure 22.

Enfin, on notera que chaque roue dentée 30 est réalisée venue de matière avec le volet 38 associé.

Pour entraîner l'iris 26 depuis sa position de fermeture vers sa position d'ouverture, la couronne intérieure 22 motrice est entraînée en rotation par le dispositif d'entraînement 42 en rotation dans le sens horaire, la couronne intérieure 22 engrène dans la denture des roues dentées 30 qui sont entraînées en rotation également dans le sens horaire, de sorte que les volets 28 de l'iris 26 pivotent pour dégager l'orifice 16.

A l'inverse, la fermeture de l'iris 26 est réalisée par la rotation de la couronne intérieure 22 dans un sens antihoraire.

Toujours selon le premier mode de réalisation de l'invention, le dispositif d'entraînement 42 en pivotement de la couronne intérieure 22 motrice, représenté aux figures 1 et 6, comporte un élément hygroscopique 56 qui actionne un mécanisme de liaison 58 pour entraîner en déplacement l'iris 26.

A cet effet, l'élément hygroscopique 56 s'étend transversalement depuis une première extrémité fixe 60 reliée sur le bâti 12, jusqu'à une seconde extrémité d'actionnement 62.

L'élément hygroscopique 56 est conçu pour s'allonger et se rétracter suivant le taux d'humidité de l'air ambiant. Selon un exemple de réalisation préféré, l'élément hygroscopique 56 est un tissu en polyamide qui est formé par plusieurs rubans dont la longueur varie selon le taux d'humidité de l'air ambiant.

On notera que l'extrémité fixe 60 de l'élément hygroscopique 56 est reliée sur le bâti 12 par l'intermédiaire d'une vis de réglage 64 et d'un écrou 66 solidaire de l'élément hygroscopique 56. Le vissage et le dévissage de la vis de réglage 64 permet de régler la position transversale de l'extrémité fixe 60 de l'élément hygroscopique 56 par rapport au bâti 12, pour régler la tension de l'élément hygroscopique 56.

Le mécanisme de liaison 58 comporte un chariot 68 mobile, un ressort de tension 70 de l'élément hygroscopique 56, et un levier 72.

Le chariot 68 s'étend transversalement depuis une extrémité libre jusqu'à une extrémité de liaison 74 qui est reliée sur l'extrémité d'actionnement 62 de l'élément hygroscopique 56.

De plus, le chariot 68 est monté coulissant transversalement sur le bâti 12 au moyen d'un rail de guidage (non visible), de sorte que le chariot mobile 68 est apte à être entraîné en coulissement par l'élément hygroscopique 56.

Le ressort de tension 70 s'étend transversalement depuis une première extrémité 76 solidaire du chariot 68, jusqu'à une seconde extrémité 78 solidaire du bâti 12, de façon à rappeler élastiquement le chariot 68 à l'encontre de l'élément hygroscopique 56, c'est-à-dire vers la droite selon la figure 6.

Ainsi, le ressort de tension 70 exerce une tension sur l'élément hygroscopique 56 pour maintenir l'élément hygroscopique 56 tendu quelque soit le taux d'hygrométrie de l'air ambiant et quelque soit l'allongement de l'élément hygroscopique 56.

Le levier 72 s'étend depuis une extrémité inférieure 80 jusqu'à une extrémité supérieure 82, le levier 72 étant monté pivotant sur le bâti 12 autour d'un axe C qui est interposé entre les extrémités 80, 82 du levier 72.

L'extrémité inférieure 80 du levier 72 présente un doigt 84 qui est en appui transversal sur une face d'appui 86 verticale formée par le chariot 68, de sorte que le chariot 68 entraîne en pivotement le levier 72.

L'extrémité supérieure 82 du levier 72 forme une fourche 88 qui coopère avec un ergot 90 solidaire de la roue intérieure 22 motrice.

L'entraînement en déplacement de l'iris 26 depuis sa position de fermeture jusqu'à sa position d'ouverture, en cas d'augmentation du taux d'humidité de l'air ambiant par exemple, est réalisé de la manière suivante.

En référence à la figure 6, l'élément hygroscopique 56 s'allonge, le chariot 68 est entraîné en coulissement vers la droite par le ressort de tension 70, le levier 72 est entraîné simultanément en pivotement dans un sens antihoraire de façon à entraîner la couronne intérieure 22 en pivotement dans un sens horaire.

Avantageusement, le levier 72 est composé d'un premier bras 92 et d'un second bras 94 qui sont montés pivotant en ciseau l'un par rapport à l'autre autour de l'axe C longitudinal, entre une position fermée représentée à la figure 6, et une position écartée (non représentée).

Les deux bras 92, 94 du levier 72 sont rappelés élastiquement vers leur position fermée par un ressort 96.

Le premier bras 92 et le second bras 94 sont conçus pour permettre le débrayage du levier 72 par l'écartement des deux bras 92, 94, lorsque la course du chariot 68 va au-delà de la position ouverte ou de la position fermée de l'iris 26.

En effet, lorsque le levier 72 est entraîné en pivotement au-delà d'une position correspondant à la position d'ouverture ou de fermeture de l'iris 26, la fourche 88 formée par le levier 72 s'écarte par pivotement des deux bras 92, 94, permettant au chariot 68 de continuer sa course librement.

Selon une autre caractéristique de l'invention, l'ensemble formé par les roues dentées 30, la couronne extérieure 18 et la couronne intérieure 22 est réalisé dans une matière plastique qui est sensiblement déformable pour limiter les effets de l'hyperstatisme dudit ensemble.

A titre non limitatif, l'ensemble formé par les roues dentées 30, la couronne extérieure 18 et la couronne intérieure 22 peut être réalisé avec un matériau plus rigide à condition de ménager des zones élastiques pour limiter l'hyperstatisme.

Selon un second exemple de réalisation de l'invention représenté aux figures 10 à 12, la couronne intérieure 22 est fixe et solidaire du bâti 12, tandis que la couronne extérieure 18 est une couronne dite motrice qui est montée mobile en rotation autour de l'axe A principal, la rotation de la couronne extérieure 18 permettant l'entraînement en rotation des volets 28 de l'iris 26 par l'intermédiaire des roues dentées 30 satellites.

Comme on peut le voir à la figure 11, la couronne intérieure 22 fixe est réalisée venue de matière avec le bâti 12.

La couronne extérieure 18 est entraînée en rotation par un dispositif d'entraînement 98 qui est similaire au dispositif d'entraînement 42 décrit pour le premier exemple de réalisation de l'invention.

Le dispositif d'entraînement 98 comporte un élément hygroscopique 100 qui actionne un mécanisme de liaison 102 pour entraîner en déplacement l'iris 26.

A cet effet, l'élément hygroscopique 100 s'étend transversalement depuis une première extrémité fixe 104 reliée sur le bâti 12, jusqu'à une seconde extrémité d'actionnement 106.

Le mécanisme de liaison 102 comporte une barre d'entraînement 108 mobile, un ressort de tension 110 de l'élément hygroscopique 100, et un levier 112 d'amplification.

Le levier 112 présente une extrémité inférieure 114 qui est montée pivotante sur le bâti 12 autour d'un axe D longitudinal, une extrémité supérieure 116 qui entraîne la barre d'entraînement 108 en coulissement transversal et une portion intermédiaire 118 qui est liée sur l'extrémité d'actionnement 106 de l'élément hygroscopique 100.

De plus, la barre d'entraînement 108 est reliée sur un ergot 120 qui est solidaire de la couronne extérieure 18, pour entraîner la couronne extérieure 18 en rotation lors du coulissement de la barre d'entraînement 108.

De façon complémentaire, la barre d'entraînement 108 est rappelée élastiquement par un ressort de rappel 122 vers la gauche suivant la figure 10, dans une position de fermeture de l'iris 26.

A cet effet, le ressort de rappel 122 s'étend transversalement depuis une première extrémité reliée sur la barre d'entraînement 108 jusqu'à une seconde extrémité opposée fixée sur le bâti 12.

Toujours selon le second exemple de réalisation de l'invention, l'entraînement en déplacement de l'iris 26 depuis sa position de fermeture jusqu'à sa position d'ouverture, en cas d'augmentation du taux d'humidité de l'air ambiant par exemple, est réalisé de la manière suivante.

En référence à la figure 10, l'élément hygroscopique 100 s'allonge, permettant au ressort de tension 110 d'entraîner le levier 112 en pivotement dans un sens antihoraire.

La barre d'entraînement 108 est entraînée en coulissement vers la gauche à l'encontre du ressort de rappel 122, entraînant simultanément la couronne extérieure 18 en pivotement dans un sens horaire de façon à ouvrir l'iris 26.

Selon ce second mode de réalisation, en référence à la figure 13, la couronne extérieure 18 motrice est bloquée radialement et portée par les roues dentées 30 de chaque volet 28.

Aussi, la couronne extérieure 18 motrice est bloquée en translation axiale par le carter avant 32 d'un premier côté et par les volets 28 d'un second côté opposé.

Dans ce but, chaque volet 28 forme une protubérance 124 qui s'étend radialement vers l'extérieur autour de la roue dentée 30 associée et qui est en appui axial sur un bord de la couronne extérieure 18.

Le dispositif d'entraînement 98 de la vanne de régulation 10 selon le second mode de réalisation présente une fonction de débrayage prévue pour absorber les sur-courses mécaniques du dispositif d'entraînement 98.

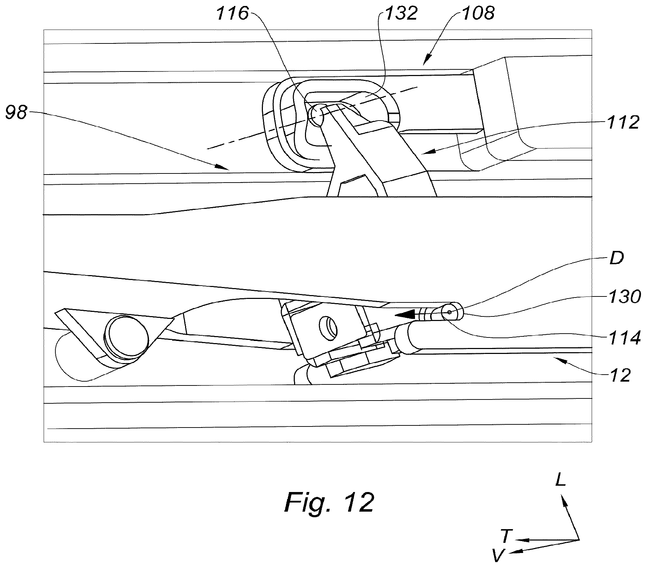

Dans ce but, comme on peut le voir à la figure 12, l'extrémité inférieure 114 du levier 112 présente la forme d'une tige cylindrique qui s'étend suivant l'axe D de rotation du levier 112.

L'extrémité inférieure 114 du levier 112 est montée coulissante dans une encoche 130 transversale ménagée dans le bâti 12, entre une position embrayée illustrée à la figure 12, dans laquelle l'extrémité inférieure 114 est en appui transversal dans le fond de l'encoche 130 et une position débrayée dans laquelle l'extrémité inférieure 114 est décalée transversalement, vers la gauche selon la figure 12, pour permettre au levier 112 de poursuivre son pivotement dans un sens horaire.

Aussi, l'extrémité supérieure 116 du levier 112 est reçue dans une lumière 132 oblongue qui est délimitée par la barre d'entraînement 108 et qui autorise une translation transversale de l'extrémité supérieure 116 du levier 112.

En cas de débrayage à la fermeture, l'extrémité supérieure 116 du levier 112 coulisse transversalement vers la droite dans la lumière 132 prévue à cet effet, laissant le levier 112 poursuivre sa course alors que la barre d'entraînement 108 est bloquée en fin de course.

A l'inverse, en cas de débrayage à l'ouverture, ou débrayage humide, l'extrémité inférieure 114 du levier 112 est entraînée en coulissement transversal vers la gauche vers sa position débrayée tandis que la barre d'entraînement 108 est bloquée en fin de course.

L'invention concerne également un système de ventilation mécanique contrôlée 11 représenté à la figure 14, qui comporte une vanne de régulation 10 reliée à un dispositif d'aspiration 126 d'air par un conduit 128.

La présente description de l'invention est donnée à titre d'exemple non limitatif.

On notera que le dispositif d'entraînement 42 en pivotement de la couronne intérieure 22 motrice peut comporter un moteur commandé par un capteur ou directement par un utilisateur, à la place de l'élément hygroscopique 56.

De même, le dispositif d'entraînement 42 en pivotement de la couronne intérieure 22 motrice peut comporter un élément comme un câble ou un curseur qui est entraîné en déplacement directement par l'utilisateur, pour actionner le mécanisme de liaison 58 qui entraîne l'iris 26 en déplacement.

On comprendra aussi que des inversions mécaniques simples sont couvertes par l'invention.

## Revendications

1. Vanne de régulation (10) à iris pour la régulation du débit d'un fluide, **caractérisée en ce qu'**elle comporte au moins :
- un bâti (12) fixe qui délimite un orifice (16) pour le passage du fluide,
- une couronne extérieure (18) dentée qui délimite une première denture (20) circulaire qui s'étend autour d'un axe (A) principal,
- une couronne intérieure (22) dentée qui délimite une seconde denture (24) circulaire qui s'étend autour de l'axe (A) principal, en vis-à-vis de la première denture (20),
- un iris (26) qui comprend une pluralité de volets (28) qui s'étendent chacun dans un plan radial perpendiculaire à l'axe (A) principal,
**caractérise en ce que** les volets (28) sont solidaires chacun d'une roue dentée (30) formant satellite qui engrène dans la couronne extérieure (18) et dans la couronne intérieure (22), chaque roue dentée (30) étant libre en rotation autour d'un axe (B) satellite associé, au moins une desdites couronnes (18, 22) étant solidaire du bâti (12) et l'autre couronne étant une couronne dite motrice qui est montée mobile en rotation et entraîne en déplacement l'iris (26) entre une position d'ouverture dans laquelle les volets (28) sont escamotés pour permettre le passage du fluide à travers l'orifice (16) de passage et une position de fermeture dans laquelle les volets (28) forment un obstacle obturant, au moins en partie, l'orifice (16) de passage du fluide.

2. Vanne de régulation (10) à iris selon la revendication 1, **caractérisée en ce qu'**elle comporte un dispositif d'entraînement (42, 98) en rotation de la couronne motrice.

3. Vanne de régulation (10) à iris selon la revendication 2, **caractérisée en ce que** ledit dispositif d'entraînement (42, 98) comporte au moins
- un élément hygroscopique (56, 100) qui s'étend depuis une première extrémité fixe (60, 104) reliée sur le bâti (12), jusqu'à une seconde extrémité d'actionnement (62, 106), l'élément hygroscopique (56, 100) étant conçu pour s'allonger et se rétracter suivant le taux d'humidité de l'air ambiant,
- un mécanisme de liaison (58, 102) qui relie la seconde extrémité d'actionnement (62, 106) de l'élément hygroscopique (56, 100) sur la couronne motrice, pour entraîner en déplacement l'iris (26) au cours de l'allongement et de la rétractation de l'élément hygroscopique (56, 100).

4. Vanne de régulation (10) à iris selon la revendication 3, **caractérisée en ce que** le mécanisme de liaison (58, 102) comporte un ressort de tension (70), (110) qui met l'élément hygroscopique (56, 100) en tension.

5. Vanne de régulation (10) à iris selon l'une quelconque des revendications précédentes, **caractérisée en ce que** la roue dentée (30) de chaque volet (28) est montée libre radialement suivant l'axe (A) principal par rapport au bâti (12), entre la couronne extérieure (18) et la couronne intérieure (22).

6. Vanne de régulation (10) à iris selon l'une quelconque des revendications précédentes, **caractérisée en ce que** la roue dentée (30) de chaque volet (28) comporte une première butée (38) ponctuelle et une seconde butée (40) ponctuelle qui sont opposées axialement et qui s'étendent suivant l'axe (B) satellite de la roue dentée (30) associée, la première butée (38) et la seconde butée (40) étant en appui axial sur un premier carter (32) et sur un second carter (34) respectivement, lesdits carters s'étendant en vis-à-vis, perpendiculairement à l'axe (B) satellite de chaque roue dentée (30).

7. Vanne de régulation (10) à iris selon l'une quelconque des revendications précédentes, **caractérisée en ce que** les volets (28) formant l'iris (26) sont coplanaires de sorte qu'ils ne se chevauchent pas entre eux.

8. Vanne de régulation (10) à iris selon l'une quelconque des revendications précédentes, **caractérisée en ce qu'**au moins une partie des pièces de l'ensemble formé par les roues dentées (30), la couronne extérieure (18) et la couronne intérieure (22) est réalisée dans une matière plastique qui est adaptée pour limiter les effets de l'hyperstatisme dudit ensemble.

9. Vanne de régulation (10) à iris selon l'une quelconque des revendications précédentes, **caractérisée en ce que** la couronne motrice est la couronne extérieure (18).

10. Vanne de régulation (10) à iris selon l'une quelconque des revendications 1 à 8, **caractérisée en ce que** la couronne motrice est la couronne intérieure (22).

11. Système de ventilation mécanique contrôlée (11) qui comporte au moins une vanne de régulation (10) à iris selon l'une quelconque des revendications précédentes.

## Patentansprüche

1. Irisblenden-Regulierschieber (10) zum Regulieren des Durchsatzes eines Fluids, **dadurch gekennzeichnet, dass** er mindestens Folgendes beinhaltet:
- ein festes Gestell (12), das eine Öffnung (16) für den Durchgang des Fluids eingrenzt,
- einen äußeren Zahnkranz (18), der eine erste kreisförmige Verzahnung (20) eingrenzt, die sich um eine Hauptachse (A) erstreckt,
- einen inneren Zahnkranz (22), der eine zweite kreisförmige Verzahnung (24) eingrenzt, die sich gegenüber der ersten Verzahnung (20) um die Hauptachse (A) erstreckt,
- eine Irisblende (26), die eine Vielzahl von Klappen (28) umfasst, die sich jeweils in einer radialen Ebene senkrecht zu der Hauptachse (A) erstrecken,
**dadurch gekennzeichnet, dass** die Klappen (28) jeweils fest mit einem Zahnrad (30) verbunden sind, das einen Satelliten bildet, der in den äußeren Kranz (18) und in den inneren Kranz (22) eingreift, wobei sich jedes Zahnrad (30) um eine zugewiesene Satellitenachse (B) herum frei dreht, wobei mindestens einer der Kränze (18, 22) fest mit dem Gestell (12) verbunden ist, und der andere Kranz ein Motorkranz genannter Kranz ist, der frei drehend montiert ist, und die Irisblende (26) zwischen einer Öffnungsposition, in der die Klappen (28) eingezogen sind, um den Durchgang des Fluids durch die Durchgangsöffnung (16) hindurch, und einer Schließposition, in der die Klappen (28) ein Hindernis bilden, das die Durchgangsöffnung (16) des Fluids zumindest teilweise verschließt, verschiebend antreibt.

2. Irisblenden-Regulierschieber (10) nach Anspruch 1, **dadurch gekennzeichnet, dass** er eine Drehantriebsvorrichtung (42, 98) des Motorkranzes beinhaltet.

3. Irisblenden-Regulierschieber (10) nach Anspruch 2, **dadurch gekennzeichnet, dass** die Antriebsvorrichtung (42, 98) mindestens Folgendes beinhaltet
- ein hygroskopisches Element (56, 100), das sich von einem ersten festen Ende (60, 104), das mit dem Gestell (12) verbunden ist, bis zu einem zweiten Betätigungsende (62, 106) erstreckt, wobei das hygroskopische Element (56, 100) gestaltet ist, um sich je nach Feuchtigkeitsgehalt der Umgebungsluft auszudehnen oder zusammenzuziehen,
- einen Verbindungsmechanismus (58, 102), der das zweite Betätigungsende (62, 106) des hygroskopischen Elements (56, 100) auf dem Motorkranz verbindet, um die Irisblende (26) im Laufe der Verlängerung und des Einzugs des hygroskopischen Elements (56, 100) verschiebend anzutreiben.

4. Irisblenden-Regulierschieber (10) nach Anspruch 3, **dadurch gekennzeichnet, dass** der Verbindungsmechanismus (58, 102) eine Spannfeder (70), (110) beinhaltet, die das hygroskopische Element (56, 100) unter Spannung setzt.

5. Irisblenden-Regulierschieber (10) nach einem der vorstehenden Ansprüche, **dadurch gekennzeichnet, dass** das Zahnrad (30) jeder Klappe (28) radial entlang der Hauptachse (A) in Bezug auf das Gestell (12) zwischen dem äußeren Kranz (18) und dem inneren Kranz (22) frei montiert ist.

6. Irisblenden-Regulierschieber (10) nach einem der vorstehenden Ansprüche, **dadurch gekennzeichnet, dass** das Zahnrad (30) jeder Klappe (28) einen ersten punktuellen Anschlag (38) und einen zweiten punktuellen Anschlag (40) beinhaltet, die axial entgegengesetzt sind, und sich entlang der Satellitenachse (B) des zugewiesenen Zahnrades (30) erstrecken, wobei der erste Anschlag (38) und der zweite Anschlag (40) jeweils in axialer Anlage auf einem ersten Gehäuse (32) und auf einem zweiten Gehäuse (34) sind, wobei sich die Gehäuse gegenüber, senkrecht zu der Satellitenachse (B) jedes Zahnrades (30) erstrecken.

7. Irisblenden-Regulierschieber (10) nach einem der vorstehenden Ansprüche, **dadurch gekennzeichnet, dass** die Klappen (28), die die Irisblende (26) bilden, komplanar sind, sodass einander nicht überschneiden.

8. Irisblenden-Regulierschieber (10) nach einem der vorstehenden Ansprüche, **dadurch gekennzeichnet, dass** mindestens ein Teil der Teile der Einheit, die durch die Zahnräder (30), den äußeren Kranz (18) und den inneren Kranz (22) gebildet wird, aus einem Kunststoffmaterial realisiert ist, das angepasst ist, um die Wirkungen der statischen Bestimmtheit der Einheit einzuschränken.

9. Irisblenden-Regulierschieber (10) nach einem der vorstehenden Ansprüche, **dadurch gekennzeichnet, dass** der Motorkranz der äußere Kranz (18) ist.

10. Irisblenden-Regulierschieber (10) nach einem der Ansprüche 1 bis 8, **dadurch gekennzeichnet, dass** der Motorkranz der innere Kranz (22) ist.

11. Kontrolliertes Wohnraumlüftungssystem (11), das mindestens einen Irisblenden-Regulierschieber (10) nach einem der vorstehenden Ansprüche beinhaltet.

## Claims

1. An iris regulating valve (10) for regulating the flow of a fluid, **characterized in that** it includes at least:
- a fixed frame (12) which delimits an orifice (16) for the passage of the fluid,
- an external toothed ring (18) which delimits a first circular toothing (20) which extends about a main axis (A),
- an internal toothed ring (22) which delimits a second circular toothing (24) which extends about the main axis (A), vis-à-vis the first toothing (20),
- an iris (26) which comprises a plurality of flaps (28) which each extend in a radial plane perpendicular to the main axis (A), **characterized in that** the flaps (28) are each secured to a toothed wheel (30) forming a satellite which meshes in the external ring (18) and in the internal ring (22), each toothed wheel (30) being free to rotate about an associated satellite axis (B), at least one of said rings (18, 22) being secured to the frame (12) and the other ring being a so-called driving ring which is mounted movable in rotation and drives the iris (26) in displacement between an open position in which the flaps (28) are retracted to allow the passage of the fluid through the passage orifice (16) and a closed position in which the flaps (28) form an obstacle closing, at least in part, the passage orifice (16) of the fluid.

2. The iris regulating valve (10) according to claim 1, **characterized in that** it includes a rotation driving device (42, 98) of the driving ring.

3. The iris regulating valve (10) according to claim 2, **characterized in that** said driving device (42, 98) includes at least
- a hygroscopic element (56,100) which extends from a first fixed end (60,104) connected on the frame (12), to a second actuating end (62, 106), the hygroscopic element (56,100) being designed to be extended and retracted depending on the humidity of the ambient air,
- a connecting mechanism (58,102) which connects the second actuating end (62,106) of the hygroscopic element (56,100) on the driving ring, to drive the iris (26) in displacement during the extension and the retraction of the hygroscopic element (56,100).

4. The iris regulating valve (10) according to claim 3, **characterized in that** the connecting mechanism (58, 102) includes a tension spring (70), (110) which puts the hygroscopic element (56,100) in tension.

5. The iris regulating valve (10) according to any one of the preceding claims, **characterized in that** the toothed wheel (30) of each flap (28) is mounted radially free along the main axis (A) relative to the frame (12), between the external ring (18) and the internal ring (22).

6. The iris regulating valve (10) according to any one of the preceding claims, **characterized in that** the toothed wheel (30) of each flap (28) includes a first point stop (38) and a second point stop (40) which are axially opposite and which extend along the satellite axis (B) of the associated toothed wheel (30), the first stop (38) and the second stop (40) axially bearing on a first casing (32) and on a second casing (34) respectively, said casings extending vis-à-vis, perpendicular to the satellite axis (B) of each toothed wheel (30).

7. The iris regulating valve (10) according to any one of the preceding claims, **characterized in that** the flaps (28) forming the iris (26) are coplanar so that they do not overlap with each other.

8. The iris regulating valve (10) according to any one of the preceding claims, **characterized in that** at least one portion of the parts of the assembly formed by the toothed wheels (30), the external ring (18) and the internal ring (22) is made of a plastic material which is adapted to limit the static indeterminacy effects of said assembly.

9. The iris regulating valve (10) according to any one of the preceding claims, **characterized in that** the driving ring is the external ring (18).

10. The iris regulating valve (10) according to any one of claims 1 to 8, **characterized in that** the driving ring is the internal ring (22).

11. A controlled mechanical ventilation system (11) which includes at least one iris regulating valve (10) according to any one of the preceding claims.
